# EUROPEAN PATENT SPECIFICATION

(11) **EP 0 617 525 B1**
(45) Date of publication and mention of the grant of the patent: **17.05.2000**
(21) Application number: 93922067.9
(22) Date of filing: 12.10.1993
(51) Int. Cl.: H04B 10/12

(54) **LIGHT PATH SWITCHING SYSTEM**
LICHTWEGSCHALTSYSTEM
SYSTEME DE COMMUTATION DE TRAJECTOIRE LUMINEUSE

(30) Priority: 13.10.1992 JP 27414192
(43) Date of publication of application: 28.09.1994
(73) Proprietor: THE FURUKAWA ELECTRIC CO., LTD., Tokyo 100 (JP)
(72) Inventor: IWATATE, Kazuo, The Furukawa Electric Co., Ltd., Chiyoda-ku, Tokyo 100 (JP); WATANABE, Kazunori, The Furukawa Electric Co., Ltd, Tokyo 100 (JP); HATTORI, Nobuhiko, The Furukawa Electric Co., Ltd., Tokyo 100 (JP); YAMASHITA, Tetsuhiro, The Furukawa, Chiyoda-ku, Tokyo 100 (JP)
(74) Representative: Tomlinson, Kerry John
(86) International application number: JP9301464
(87) International publication number: WO9409575

(56) References cited:
- EP-A- 0 305 994
- JP-A- 59 151 543
- JP-A- 63 152 233
- PATENT ABSTRACTS OF JAPAN vol. 8, no. 285 (E-287) 26 December 1984 & JP-A-59 151 543 (TOSHIBA)
- PATENT ABSTRACTS OF JAPAN vol. 9, no. 305 (E-363) (2028) 3 December 1985 & JP-A-60 144 030 (HITACHI SEIKAKUSHO)

## Description

### TECHNICAL FIELD

The present invention relates to an optical line switching system for automatically switching optical lines when the optical line is broken or when the optical line is transferred due to hindrance in two sets of optical transmission line pairs each set of which has an optical line and a standby optical bypath line.

### BACKGROUND ART

In the conventional optical communication system, two stations which have a transmitter for transmitting optical signals to be transmitted and a receiver for receiving the transmitted optical signals and are several kilometers away from each other are connected by many units of optical transmission line pairs, one unit consisting of two sets of optical transmission line pairs which has first and second optical switches at each end of the optical line and the standby optical bypath line.

In this optical communication system, when the optical line of any one unit is broken, or when transfer due to hindrance takes place, that is, when the existing optical line installed between two stations is temporarily removed due to road work etc. by bypassing the optical line in the work section, it is necessary to switch the optical line to the standby optical bypath line.

In this case, the optical signal is switched from the optical line to the standby optical bypath line substantially at the same time by synchronously switching over the first and second optical switches of each optical transmission line pair.

In the aforementioned optical line switching system, however, a communication optical fiber as long as several kilometers connecting both optical switches is required for each optical transmission line pair because the first and second optical switches are synchronously switched. In addition, communication equipment is required to operate both the optical switches. Therefore, the system becomes large-scale, and the cost increases in building the optical line switching system.

Further, in the aforementioned optical line switching system, if a fault occurs in the communication optical fiber, the first and second optical switches cannot be operated; as a result, switching of the optical line cannot be performed.

JP-A-59151543 discloses a system wherein stations are connected by a pair of optical fibres, one of these fibres representing a bypass line. The stations monitor transmissions on the main optical fibre and switch to the bypass line if the main fibre fails.

JP-A-60144030 discloses a system wherein stations are connected by a conduit containing two main optical fibres and two bypass fibres, the latter being brought into use as necessary.

Neither of these documents suggests the use of a single controller to switch two pairs of lines on to their respective bypass lines.

EP-A-0305994 describes an optical line switching system in which first and second stations are connected to each other by two sets of optical transmission line pairs, each set comprising an optical line and a standby optical bypath line, and the signals are switched between the optical lines in accordance with a switching status signal.

### DISCLOSURE OF THE INVENTION

An object of the present invention is to provide an optical line switching system in which switching between an optical line and a standby optical bypath line can smoothly be performed and appropriate measures can easily be taken against breakage of the optical line or transfer due to hindrance thereof.

To achieve the above object, according to the present invention, there is provided an optical line switching system in which first and second stations, each of which has a signal transmitting means for transmitting optical signals to be sent and a signal receiving means for receiving optical signals sent from said signal transmitting means are provided, characterised in that the first and second stations are connected to each other by at least two sets of optical transmission line pairs, each set of which comprises an optical line and a standby optical bypath line and is provided with first and second optical switches at each end, so that the optical signals transmitted through said each optical transmission line pair can be switched from said optical line to said standby optical bypath line by said first and second optical switches provided in each of said optical transmission line pairs, and in that first and second control means are provided on the first and second station sides of said optical transmission line pairs respectively, which control means comprise means for detecting the transmitted optical signal and means for switching over the optical switches of said two sets of optical transmission line pairs located on the station side of the respective control means in accordance with the light level of the detected optical signal; and wherein said first and second stations are connected by a plurality of units, one unit consisting of said two sets of optical transmission line pairs, and said first and second control means are used in common for the units.

The each control means, which is provided on the first and second station side of each set of optical transmission line pair of two sets of optical transmission line pairs, monitors the level of optical signal transmitted through the optical line of each optical transmission line pair, and judges whether switching of optical line is needed or not on the basis of level of the monitored optical signal.

When either of the optical lines has a fault or the like and the path of optical signal needs to be switched from the optical line to the standby optical bypath line, the first control means provided on the second station side switches over the first and second optical switches located on the second station side of the aforementioned two pairs of optical transmission line pairs.

By this switching operation, the level of optical signal monitored by the second control means located on the first station side becomes zero, so that the control means provided on the first station side switches over the first and second optical switches located on the first station side.

Thus, the transmission path of optical signal of two sets of optical transmission line pairs is switched from the optical line to the standby optical bypath line.

As seen from the above description, in the optical line switching system of the present invention, the first and second optical switches provided in the two sets of optical transmission line pairs are switched over on each of the first and second station sides. This eliminates the need for a communication optical fiber as long as several kilometers connecting the first and second optical switches provided in each optical transmission line pair and communication equipment for operating both the optical switches, so that a large-scale system and increased cost can be avoided in building the optical line switching system.

Additionally, in the optical line switching system of the present invention, switching between the optical line and the standby optical bypath line can smoothly be performed and appropriate measures can easily be taken against breakage of the optical line or transfer due to hindrance thereof.

### BRIEF DESCRIPTION OF THE DRAWINGS

FIG. 1 is a schematic diagram of an optical line switching system of the present invention;
FIG. 2 is a characteristic diagram showing the change of intensity level of optical signal detected by each controller when the optical line is switched to the standby optical line by the optical line switching system; and
FIG. 3 is a characteristic diagram showing the change of intensity level of optical signal detected by each controller when the standby optical line is switched to the original, optical line.

### BEST MODE FOR CARRYING OUT THE INVENTION

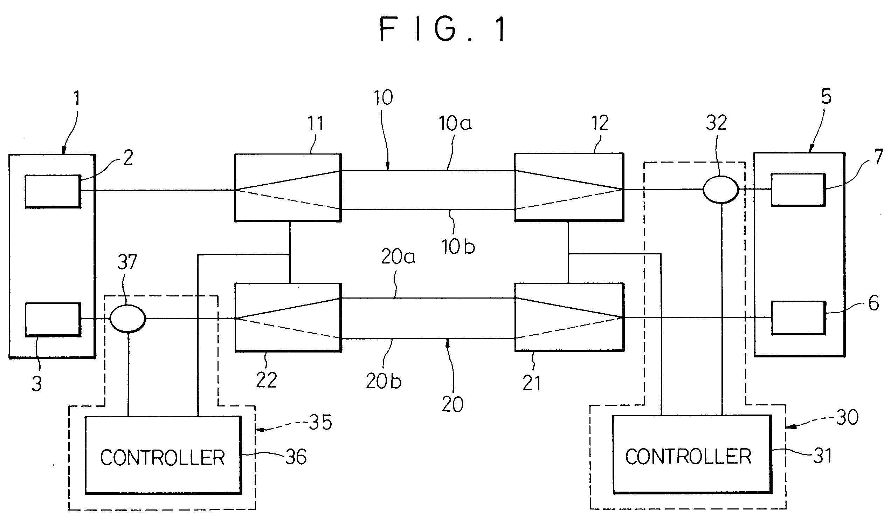

One embodiment of the present invention will be described in detail below with reference to FIGS. 1 through 3.

Although the optical line switching system is connected by many units, one unit being optical transmission line pairs consisting usually of two sets, a description of one unit is given below for simple explanation.

In the unit of the optical line switching system of the present invention shown in Figure 1, a first station 1 and a second station 5 are optically connected to each other by two sets of optical transmission line pairs 10 and 20. The optical transmission line pair 10 is provided with optical swtiches 11 and 12 at each end, whereas the optical transmission line pair 20 is likewise provided with optical switches 21 and 22.

The first station 1 has a transmitter 2 and a receiver 3, and the second station 5 has a transmitter 6 and a receiver 7. The transmitters 2 and 6 send optical signals to be transmitted to the optical transmission line pairs 10 and 20, respectively. The transmitter 2 is optically connected to the receiver 7 by means of the optical transmission line pair 10, whereas the receiver 3 to the transmitter 6 by means of the optical transmission line pair 20.

The optical transmission line pair 10 includes an optical line 10a and a standby optical bypath line 10b, and has control means 30 on the receiver 7 side. The control means 30 has a controller 31 and a switching device 32, and the switching device 32 separates the optical signals sent through the optical transmission line pair 10 and sends the signals to the receiver 7 and the controller 31.

The optical transmission line pair 20 is constructed in the same manner as the optical transmission line pair 10. It includes an optical line 20a and a standby optical bypath line 20b, and is provided with control means 35, having a controller 36 and a switching device 37, on the receiver 3 side. The switching device 37 separates the optical signals sent through the optical transmission line pair 20 and sends the signals to the receiver 3 and the controller 36.

For the switching devices 32 and 37, a light branching/coupling component such as a coupler, an optical component based on the local detection system, etc. are used.

The controller 31 functions as an optical sensor which measures the light level of optical signal separated by the switching device 32 and switches over the optical switches 12 and 21 provided in the optical transmission line pair 10 and the optical transmission line pair 20 and also as an electronic control unit (ECU) having a timer. The controller 36, which also functions like the controller 31, switches over the optical switch 11 and 22 provided in the optical transmission line pair 10 and the optical transmission line pair 20.

The optical switches 12 and 21 or the optical switches 11 and 22 can be switched over by manual operation of the controller 31 or 36.

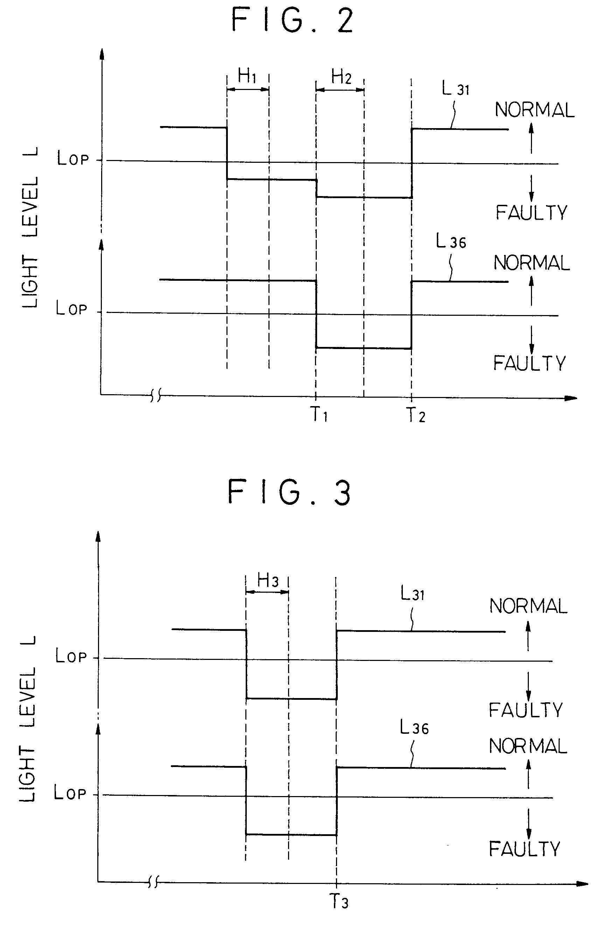

The optical line switching system of the present invention is configurated as described above, and when a failure such as broken line or abnormally increased loss occurs in the optical line 10a, the optical line is switched as described below with reference to Figure 2.

It is assumed that a fault occurs in the optical line 10a, and the intensity level L₃₁ of optical signal which is separated by the switching device 32 and detected by the controller 31 decreases to a level below the preset value Lₒₚ.

The controller 31 monitors the intensity level of optical signal for a period H₁ of time, checks that the decrease in intensity level of the optical signal is not a temporary phenomenon, and then outputs a switching signal to the optical switches 12 and 21 at time T₁. Thereby, the connections at the optical switches 12 and 21 shown in FIG. 1 are changed from the condition indicated by the solid line to that indicated by the broken line.

As the result that the connection at the optical switch 21 is changed, the optical signals which are separated by the switching device 37 and sent to the controller 36 are cut off by the optical switch 21, so that the intensity level L₃₆ detected by the controller 36 becomes zero.

The controller 36 judges the cutoff of optical signal to be an occurrence of fault after monitoring for a period H₂ of time and outputs switching signals to the optical switches 11 and 22 at time T₂ as shown in FIG. 2, so that the connection in FIG. 1 is changed from the condition indicated by the solid line to that indicated by the broken line.

In this case, the controller 36 is set by considering that the optical switches 12 and 21 are not switched over before the intensity level L₃₁ of the detected optical signal becomes normal in order to prevent the optical switches 12 and 21 from being switched over again after monitoring for a period H₂ of time.

Thus, in FIG. 1, the path of optical signals transmitted from the transmitter 2 and the transmitter 6 to the receiver 7 and the receiver 3, respectively, between the first and second stations 1,5 is changed from the optical lines 10a and 20a to the standby optical bypath line 10b and 20b.

To return the transmission lines of optical signal to the original optical lines 10a and 20a after the fault of the optical line 10a is corrected, optical switches 11 and 22 are outputted by manual operation of the controller 36, so that the connection is changed from the broken line to the solid line in FIG. 1.

This switching operation cuts off the transmission of optical signals between the first station 1 and the second station 5; as a result, the intensity levels L₃₁ and L₃₆ of the optical signals which are monitored by the controllers 31 and 36 become zero as shown in FIG. 3.

Then, the controller 31 checks by monitoring for the period H₃ of time as shown in FIG. 3 that the cutoff of optical signal caused by the switching operation is not a temporary phenomenon, and thereafter outputs switching signals to the optical switches 12 and 21 to change the connection shown in FIG. 1 from the broken line to the solid line at time T₃.

This switches the transmission lines of optical signal transmitted between the first station 1 and the second station 5 from the standby optical bypath lines 10b and 20b to the original optical lines 10a and 20a, respectively.

When the optical lines are switched, the optical switches 12 and 21 or the optical switches 11 and 22 may be switched over by manual operation of the controllers 31 and 36.

When the optical lines for optical signal are switched to the standby optical bypath lines 10b and 20b because of a fault occurring in the optical line 20a or a transfer due to hindrance of the optical line 20a, too, the same operation as described above may be performed.

In the aforementioned optical line switching system, the number of repetitions of judgment is preset in the controllers 31 and 36. This avoids a wasteful repetition of judgment when the optical lines 10a and 20a and the standby optical bypath lines 10b and 20b become faulty at the same time in each of optical transmission line pairs 10 and 20.

In the embodiment of the switching system, description has been given of one unit consisting of two sets of optical transmission line pairs 10 and 20. However, the aforementioned switching system is composed of a plurality of units, and the controllers 31 and 36 are used in common for the units, which achieves a reduction in cost of switching system. The controllers 31 and 36 can identify the optical signal sent through two sets of optical transmission line pairs 10 and 20 composing each unit.

Further, in the optical line switching system, when a fault is detected in any unit, the optical line of that unit only may be switched to the standby optical bypath line, or the optical lines of all units may be switched to the standby optical bypath lines.

## Claims

1. An optical line switching system in which first and second stations (1 & 5), each of which has a signal transmitting means (2 & 6)for transmitting optical signals to be sent and a signal receiving means (3 & 7) for receiving optical signals sent from said signal transmitting means are provided, characterised in that the first and second stations are connected to each other by at least two sets of optical transmission line pairs (10 & 20), each set of which comprises an optical line (10a & 20a) and a standby optical bypath line (10b & 20b) and is provided with first and second optical switches (11 & 12, 21 & 22) at each end, so that the optical signals transmitted through said each optical transmission line pair can be switched from said optical line to said standby optical bypath line by said first and second optical switches provided in each of said optical transmission line pairs, and in that
first and second control means (30 & 35) are provided on the first and second station sides of said optical transmission line pairs respectively, which control means comprise means for detecting the transmitted optical signal and means (31 & 36) for switching over the optical switches of said two sets of optical transmission line pairs located on the station side of the respective control means in accordance with the light level of the detected optical signal; and wherein said first and second stations are connected by a plurality of units, one unit consisting of said two sets of optical transmission line pairs, and said first and second control means are used in common for the units.

2. An optical line switching system according to claim 1, wherein each of said first and second control means is provided with a controller (31, 36) and a switching device (32, 37).

3. An optical line switching system according to claim 2, wherein said switching device is a light branching/coupling component.

4. An optical line switching system according to claim 2, wherein said switching device is an optical component based on the local detection system.

## Patentansprüche

1. Lichtleitungsschaltsystem, bei dem eine erste und zweite Station (1 & 5), die jeweils ein Signalübertragungsmittel (2 & 6) zum Übertragen von zu sendenden Lichtsignalen und ein Signalempfangsmittel (3 & 7) zum Empfangen von durch das Signalübertragungsmittel gesendeten Lichtsignalen aufweisen, vorgesehen sind, dadurch gekennzeichnet, daß die erste und zweite Station miteinander über mindestens zwei Sätze von Lichtübertragungsleitungspaaren (10 & 20) verbunden sind, wobei jeder Satz eine Lichtleitung (10a & 20a) und eine Reserveumgehungslichtleitung (10b & 20b) umfaßt und an jedem Ende mit einem ersten und zweiten Lichtschalter (11 & 12, 21 & 22) versehen ist, so daß die durch jedes Lichtübertragungsleitungspaar übertragenen Lichtsignale durch den in jeder der Lichtübertragungsleitungspaare vorgesehenen ersten und zweiten Lichtschalter von der Lichtleitung zu der Reserveumgehungslichtleitung umgeschaltet werden können, und daß
ein erstes und zweites Steuermittel (30 & 35) auf der Seite der ersten bzw. zweiten Station der Lichtübertragungsleitungspaare vorgesehen sind, wobei die Steuermittel Mittel zum Erfassen der übertragenen Lichtsignale und Mittel (31 & 36) zum Umschalten der Lichtschalter der beiden, auf der Stationsseite des entsprechenden Steuermittels angeordneten Sätze von Lichtübertragungsleitungspaaren gemäß dem Lichtpegel des erfaßten Lichtsignals umfassen; und wobei die erste und zweite Station durch mehrere Einheiten verbunden sind, wobei eine Einheit aus den beiden Sätzen von Lichtübertragungsleitungspaaren besteht und das erste und zweite Steuermittel zusammen für die Einheiten verwendet werden.

2. Lichtleitungsschaltsystem nach Anspruch 1, bei dem jedes des ersten und zweiten Steuermittels mit einer Steuerung (31, 36) und einer Schalteinrichtung (32, 37) versehen ist.

3. Lichtleitungsschaltsystem nach Anspruch 2, bei dem die Schalteinrichtung eine Lichtverzweigungs/kopplungskomponente ist.

4. Lichtleitungsschaltsystem nach Anspruch 2, bei dem die Schalteinrichtung eine optische Komponente auf der Grundlage des lokalen Erfassungssystems ist.

## Revendications

1. Système de commutation de lignes optiques dans lequel on prévoit des première et deuxième stations (1 et 5), chacune présentant un moyen émetteur de signaux (2 et 6) pour émettre des signaux optiques à transmettre et un moyen récepteur de signaux (3 et 7) pour recevoir des signaux optiques transmis depuis ledit moyen émetteur de signaux, caractérisé en ce que les première et deuxième stations sont connectées l'une à l'autre par au moins deux groupes de paires de lignes de transmission optiques (10 et 20), chaque groupe comprenant une ligne optique (10a et 20a) et une ligne de dérivation optique de réserve (10b et 20b) et étant pourvu de premier et deuxième commutateurs optiques (11 et 12, 21 et 22) à chaque extrémité, de façon à ce que les signaux optiques transmis par chaque dite paire de lignes de transmission optiques puissent être commutés de ladite ligne optique à ladite ligne de dérivation optique de réserve par lesdits premier et deuxième commutateurs optiques prévus dans chacune desdites paires de lignes de transmission optiques, et en ce que
des premier et deuxième moyens de commande (30 et 35) sont prévus aux côtés des première et deuxième stations desdites paires de lignes de transmission optiques respectivement, lesquels moyens de commande comprennent un moyen pour détecter le signal optique émis et un moyen (31 et 36) pour commuter les commutateurs optiques desdits deux groupes de paires de lignes de transmission optiques situés du côté station du moyen de commande respectif conformément au niveau de lumière du signal optique détecté; et dans lequel lesdites première et deuxième stations sont connectées par une pluralité d'unités, une unité étant constituée desdits deux groupes de paires de lignes de transmission optiques, et lesdits premier et deuxième moyens de commande sont utilisés en commun pour les unités.

2. Système de commutation de lignes optiques selon la revendication 1, dans lequel chacun desdits premier et deuxième moyens de commande est pourvu d'un régisseur (31, 36) et d'un dispositif de commutation (32, 37).

3. Système de commutation de lignes optiques selon la revendication 2, dans lequel ledit dispositif de commutation est un composant d'embranchement / de couplage de la lumière.

4. Système de commutation de lignes optiques selon la revendication 2, dans lequel ledit dispositif de commutation est un composant optique basé sur le système de détection local.
